**Europäisches Patentamt**

**European Patent Office**

**Office européen des brevets**

(11) Veröffentlichungsnummer : **0 262 312 B1**

(12)

# EUROPÄISCHE PATENTSCHRIFT

(45) Veröffentlichungstag der Patentschrift :
**05.02.92 Patentblatt 92/06**

(51) Int. Cl.$^5$ : **A47J 43/25**

(21) Anmeldenummer : **87109688.9**

(22) Anmeldetag : **06.07.87**

(54) **Rohkostschneider.**

(30) Priorität : **29.09.86 DE 8625986 U**

(43) Veröffentlichungstag der Anmeldung :
**06.04.88 Patentblatt 88/14**

(45) Bekanntmachung des Hinweises auf die
Patenterteilung :
**05.02.92 Patentblatt 92/06**

(84) Benannte Vertragsstaaten :
**AT BE CH DE ES FR GB GR IT LI LU NL SE**

(56) Entgegenhaltungen :
**EP-A- 0 189 743**
**GB-A- 2 054 358**

(73) Patentinhaber : **A. Börner GmbH**
**Industriegebiet**
**W-5561 Niederkail (DE)**

(72) Erfinder : **Börner, Alfred**
**Neustrasse**
**W-5565 Niederkail (DE)**

(74) Vertreter : **Goddar, Heinz J., Dr. et al**
**FORRESTER & BOEHMERT**
**Widenmayerstrasse 4/I**
**W-8000 München 22 (DE)**

## Beschreibung

Die Erfindung betrifft einen Rohkostschneider nach dem Oberbegriff des Anspruches 1.

Aus der DE-PS 22 60 358 ist ein Rohkostschneider in Form eine Küchenreibe bekannt, die aus Kunststoffspritzguß besheht und einen Rahmen mit rechteckigen Löchern aufweist, in welche in Schneidrichtung von der Schneidkante nach unten bogenförmig gekrümmte Zähne auslaufen. Auf der Rückseite der Küchenreibe sind weitere Zähne vorgesehen. Mit dieser bekannter Reibe läßt sich mit verhältnismäßig geringem Kraftaufwand Gemüse,

Obst oder dgl. zu Rohkost zerkleinern. Das zerkleinerte Gut wird weitgehend in dünne Streifen zertrennt ohne zerraspelt und zermatscht zu werden.

Zwar ist der Kraftaufwand bei der Verwendung der bekannten Küchenreibe wie oben erwähnt bereits wesentlich geringer als bei bisher bekannten Küchenreiben, er ist jedoch zu hoch, um das Reibgut auch in einer ziehenden Bewegung, wenn also die Schneiden der Messer nach unten gerichtet sind, zu zerkleinern.

Die DE-OS 35 00495 zeigt und beschreibt ein Küchengerät zum Schneiden von Kartoffeln, insbesondere halbrohen Kartoffeln, bei dem aus Kunststoff einstückig mit der Grundplatte verbundene doppelschneidige Messer in zwei hintereinander versetzten Querreihen vorgesehen sind. Bei diesem Küchengerät verlaufen die Schneiden der Messer zunächst parallel in Schneidrichtung, wonach sie konkav nach unten abgebogen werden. Dieses Küchengerät eignet sich besonders gut für die Herstellung von lokkenartig gekrümmten Kartoffelstreifen, wenn die Kartoffeln vorher halbroh gekocht wurden. Weniger gut und vor allen Dingen mit wesentlichen mehr Krafteinsatz ist dieses Küchengerät zur Herstellurig von Rohkost geeignet.

Aus der EP-OS 0 189 743 ist ein Rohkostschneider der eingang genannten Art bekannt, der sich im Prinzip durchaus bewährt hat. Der Erfindung liegt die Aufgabe zugrunde, diesen bekannten Rohkostschneider in seiner Herstellung und Handhabung insbesondere dahingehend zu verbessert, daß der Schneidwiderstand noch weiter verringert und die Herstellung vereinfacht und noch kostengünstiger gestaltet wird.

Erfindungsgemäß wird diese Aufgabe durch im Kennzeichen des Anspruchs 1 aufgeführten Merkmale gelöst.

Besonders bevorzugte Ausführungsformen der Erfindung ergeben sich aus den Unteransprüchen.

Über einen langen Weg des Schneidvorganges bleibt der U-förmige Querschnitt erhalten. Dadurch werden die Schnittkräfte gegenüber herkömmlichen Küchenreiben deutlich verringert. Das Schneidgut wird praktisch nicht verdrängt sondern sauber zerschnitten. Überraschenderweise verstopft auch nicht der unter den Messern verbleibende Freiraum der Grundplatte. Die weitgehend parallele Anordnung der Messerschneiden scheint im Gegenteil das Freischneiden der einzelnen Messer zu begünstigen. Verteilhaft an der Ausbildung der Messerreihe aus einem Metallband ist neben der einfachen Herstellung durch Prägen und dem vorherigen beidseitigen maschinellen Anschleifen in erster Linie, daß ein relativ dünnes Metallband von ca. 1/10 mm verwendet werden kann. Dieser dünne Querschnitt der Schneiden erstreckt sich naturgemäß über die gesamte Schneidenlänge und - tiefe, so daß das Schneidgut beim Schneiden praktisch nicht gequetscht wird. Die Bedeutung dieses Vorteils erkennt man sofort, wenn man bedenkt, daß die Dicke der Seitenstege aufsummiert durch das Schneidgut hindurch gedrückt werden muß. Trotz der Verwendung eines derart dünnen Metallbandes überrascht die enorme Stabilität der Messer. Dies schneit einerseits auf die mäanderförmige Ausbildung des Metallbandes und andererseits darauf zurückzuführen zu sein, daß jeder untere Quersteg in der Grundplatte befestigt ist.

Zwar ist aus dem deutschen Gebrauchsmuster 19 91 402 ein Haushaltsschneidegerät zum Schneiden von Pommes Frites bekannt, bei dem ein quer zur Schneidrichtung angeordnetes, rechtwinklig wellenförmig gebogenes Messer angebracht ist. Dieses Messer ist auf den sich gegenüberliegenden Längsleisten des Küchengerätes befestigt. Zum Schneiden von Rohkost ist dieses Gerät aufgrund seiner Messergröße und Schneiddicke nicht geeignet.

Auch ist ein sogenannter Waffelschneider aus der Praxis bekannt, bei dem ein schräg zur Schneidrichtung angebrachtes wellenförmig gebogenes Messer In der hinteren Auflageplatte befestigt ist. Auch dieses Messer weist zu große Messer und eine zu große Schneidendicke auf.

Wie bereits weiter oben ausgeführt, kommt es nämlich beim Schneiden von Rohkost darauf an, möglichst dünne Streifen zu erzeugen. Will man diese Streifen mittels D-förmiger Messer schneiden, so ergibt sich das Problem, daß die Seitenstege das Gemüse durchdringen müssen. Bei der Vielzahl von Seitenstegen, die für eine solche Rohkostreibe erforderlich sind, kann die die Schneidenstärke auf ein solches Maß aufaddieren, daß nicht nur der Schneidwiderstand erhöht wird, sondern auch die Verklemmungsgefahr der bereits geschnittenen Streifen beträchtlich zunimmt.

Die Sahneidendicke einfach zu verringern ist jedoch wegen der daraus resultierenden Stabilitätsplobleme der Messerreihe nicht ganz unproblematisch. Diesen einander widerstrebenden Anforderungen wurde erstmals mit dieser Erfindung Rechnung getragen.

Gemäß einer bevorzugten Ausführungsform sind die oberen Querstege zur Bildung doppelschneidiger Messer parallel zur Ebene der Anlaufflächen ausgerichtet und bezogen auf die Schneidrichtung jeweils in ihrer Mitte zur Grundplatte hin eingedellt ausgebildet. Der Schneidvorgang erfolgt infolgedessen praktisch ohne jeden zusätzlichen Widerstand. Das Umlenken des geschnittenen Gutes durch die Eindellungen erfolgt praktisch erst dann, wenn das Schneidgut eine gewisse-Länge hat, so daß es sich mehr oder weniger von selbst umlegt. Aufgrund dieser Merkmale ist es mit Leichtigkeit möglich, daß die Hausfrau das Gut durch Hin- und Herbewegen bei jedem Hub schneidet. Dies ist gar nicht so selbstverständlich, da bislang der hohe Schneidwiderstand bei Rohkostreiben bei der Herbewegung zu einem relativ schlechten Schnittergebnis geführt hat, d. h. daß bei der Herbewegung in der Regel weniger abgeschnitten wude, als bei der Hinbewegung.

Eine vorteilhate Ablenkung der geschnittenen Streifen ergibt sich dadurch, daß die Eindellungen der oberen Querstege quer zur Schneidrichtung gesehen etwa dreieckförmig ausgebildet sind.

Die Eindellungen enden in vorteilhafter Weise mit Abstand oberhalb der Ebene der Anlaufflächen. Dies reicht zum Freischneiden der Messer ohne weiteres aus; darüber hinaus werden die Umlenkkräfte durch die Eindellungen sehr gering gehalten.

Ein vorteilhafter Abstand zwischen der Mitte einer Eindellung und der zugehörigen Schneiden eines Messers entspricht etwa zwei bis drei Mal der Tiefe der Eindellung. Der Abstand vom Rand einer Eindellung bis zur zugehörigen, benachbarten Schneide entspricht etwa einmal der Tiefe einer Eindellung. Diese Größenverhältnisse gestalten den Schneidvorgang in besonders vorteilhafter Weise, wobei letzteres Maß, d. h. der Abstand vom Rand einer Eindellung bis zur benachbarten Schneidkante auch um einiges größer gewählt werden kann.

Gemäß einer bevorzugsten Ausführungsform entspricht die Breite eines oberen Quersteges etwa der eines unteren Quersteges

Als Weiterbildung der Rohkostreibe wird bevorzugt, daß zwei Messerreihen in Schneidrichtung hintereinander und quer zur Schneidrichtung versetzt auf der Grundplatte angeordnet sind.

Obwohl es auch bevorzugt möglich ist, die Messerreihen schräg zur Schneidrichtung anzuordnen, wobei jedoch die Längserstreckung der Messer in Schneidrichtung verläuft, ist entsprechend einer Ausführungsform vorgesehen, daß die Messerreihen rechtwinklig zur Schneidrichtung auf der Grundplatte angebracht sind.

Es ist vorteilhaft, wenn die Grundplatte aus Kunststoff ausgebildet ist.

Eine besonders stabile Anbringung der Messerreihe an der Grundplatte ergibt sich, wenn auf der Grundplatte in Höhe der Messerreihen von Längsstegen begrenzte Durchbrüche angeordnet sind, welche unterhalb der oberen Querstege der Messer liegen, wobei die unteren Querstege der Messer in die Längsstege der Grundplatte miteingespritzt sind.

Das Freischneiden der Messer wird dadurch weiter erleichtert, daß die Durchbrüche länger als die oberen Querstege der Messer ausgebildet und mit Abstand von den Schneiden der Messer enden.

Eine gute Verankerung der unteren Querstege in den Längsstegen der Grundplatte wird dadurch erzielt, daß an den unteren Querstegen Eindrückungen zum Verankern der Querstege im Kunststoff angebracht sind.

Die gute Verankerung läßt sich noch weiter dadurch verbessern, daß die Eindrückungen mit Öffnungen zum Durchtritt des Kunststoffes versehen sind. Während des Spritzgießens des Rohkostschneider tritt der Kunststoff durch diese Öffnungen hindurch, was zu einer formschlüssigen Verbindung zwischen den unteren Querstegen der Messer und der Grundplatte führt.

Zur Qualität der Verangerung der unteren Querstsege trägt weiterhin bei, daß bezogen auf die Schneidrichtung die Eindrückungen in der Mitte der unteren Querstege angebracht sind.

Im Folgenden wird ein Ausführungsbeispiel der Erfindung anhand einer Zeichnung näher erläutert. Es zeigen:

Fig. 1 eine perspektivische Draufsicht auf den erfindungsgemäßen Rohkostschneider,

Fig. 2 einen Schnitt durch eine Messerreihe entlang der Linie II-II aus Fig. 1 und

Fig. 3 einen Schnitt durch eine Messerreihe entlang der Linie III-III aus Fig. 1.

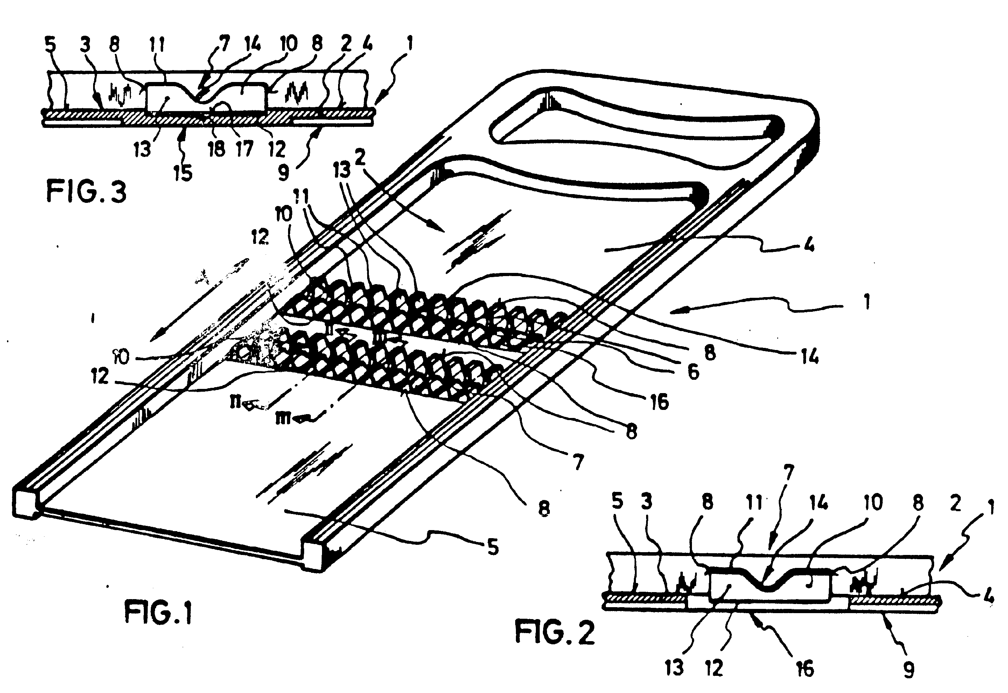

Fig. 1 zeigt einen Rohkostschneider 1 für das Schneiden von Rohkoststreifen.

Der Rohkostschneider 1 umfaßt eine Grundplatte 2, auf deren Oberseite 3 zwei in einer Ebene liegende Anlaufflächen 4 und 5,vorgesehen sind. Zwischen den Anlaufflächen 4 und 5 sind zwei quer zur Schneidrichtung A und gegeneinander versetzte Messerreihen 6 und 7 angeordnet. Die Messerreihen 6 und 7 weisen Messer mit U-förmigen Schneiden 8 auf, welche in der Höhe über die Anlaufflächen 4 und 8 hinausragen und zur Unterseite 9 der Grundplatte 2 hin offen ausgebildet sind. Die Unterseite der Messer ist zumindest zum Teil zur Grundplatte hin geneigt ausgebildet (vgl. Fig. 2).

Wie auch noch aus Fig. 1 erkennbar ist, bestehen die Messerreihen aus jeweils einen dünnen Metallband 10 mit einer Stärke von etwa 1/10 mm. Das Metallband 10 ist unter Bildung von oberen Querstegen 11, unteren Querstegen 12 und diese verbindenden Seitenstege 13 mäanderförmig ausgebildet.

Wie besonders gut aus Fig. 3 ersichtlich ist, sind die unteren Querstangen in der Grundplatte befestigt und unterhalb der Anlaufflächen 4, 5 angeordnet.

Demgegenüber ragen die oberen Querstege 11 über die Anlaufflächen 4, 5 hinaus und sind bezogen auf die Schneidrichtung A im wesentlichen parallel zur Ebene der Anlaufflächen 4, 5 ausgerichtet.

Wie deutlich aus der Zeichnung hervorgeht, sind die Messerreihen 6 und 7 doppelschneidig ausgebildet, wobei die oberen Querstege 11 in ihrer Mitte zur Grundplatte hin gerichtete Eindellungen 14 aufweisen.

Aus den Fig. 2 und 3 ist zu entnehmen, daß die Eindellungen 14 der oberen Querstege 11 quer zur Schneidrichtung A gesehen etwa dreieckförmig ausgebildet sind. Die Eindellungen 14 enden mit Abstand oberhalb der Ebene d er Anlaufflächen 4 und 5.

Wie besonders gut aus Fig. 2 ersichtlich ist, beträgt der Abstand zwischen der Mitte einer Eindellung 14 und der zugehörigen Schneiden 8 eines Messers etwa das Doppelte bis Dreifache der Tiefe der Eindellung 14.

Vom Rand einer Eindellung 14 aus gemessen beträgt der Abstand bis zur zugehörigen benachbarten Schneide 8 etwa einmal die Tiefe der Eindellung.

Aus Fig. 1 ist zu entnehmen, daß die Breite eines oberen Quersteges 11 etwa der eines unteren Quersteges 12 entspricht.

Obwohl die Messerreihen 6 und 7 auch schräg zur Schneidrichtung A angeordnet sein könnten, sind sie bei diesem Ausführungsbeispiel rechtwinklig zur Schneidrichtung A auf der Grundplatte 2 angebracht.

Die Grundplatte 2 selbst ist aus Kunststoff ausgebildet. Die Metallbänder 10, aus denen die Messerreihen 6 und 7 hergestellt sind, sind in die Grundplatte 2 des Rohkosischneiders 1 miteingespritzt.

Dazu sind auf der Grundplatte 2 in Höhe der Messerreihen 6, 7 von Längsstegen 15 begrenzte Durchbrüche 16 angeordnet, welche unterhalb der oberen Querstege 11 der Messer 6 bzw. 7 liegen. Die unteren Querstege 12 der Messer 6 bzw. 7 sind hierbei in die Längsstege 15 der Grundplatte 2 miteingespritzt.

Zur besseren Verankerung der unteren Querstege 12 in den Längsstegen 15 der Grundplatte 2 sind in den Querstegen Eindrückungen 17 angebracht.

Damit die Querstege der Messer noch besser in den Längsstegen der Grundplatte verankert werden können, sind die Eindrückungen 17 mit Öffnungen 18 versehen, durch welche während des Spritzgießens der Kunststoff hindurchtreten kann.

Bezogen auf die Schneidrichtung A sind die Eindrückungen 17 und auf die Öffnungen 18 in der Mitte der unteren Querstege 12 angebracht.

Nachzutragen ist noch, daß die Durchbrüche 16, wie insbesondere aus Fig. 2 hervorgeht, länger als die oberen Querstege 11 der Messer 6 bzw. 7 ausgebildet sind und mit Abstand von den Schneiden 8 der Messer enden. Aus Fig. 1 geht dies nicht so deutlich hervor.

Im Folgenden wird die Wirkungsweise der Erfindung läutert.

Mit dem dargestellten Rohkostschneider läßt sich Gemüse in sehr feine Streifen schneiden, ohne daß es dabei zerfasert oder sonst weitergehend beschädigt wird.

Zu Beginn des Zerkleinerungsvorganges stetzt man das Schneigut auf der oberen Anlauffläche 4 auf, um es dann gegen die erste Messerreihe 6 zu führen.

Beim Auftreffen des Schneidgutes auf die Schneide 8 der ersten Messerreihe 6 dringen die oberen Querstege 11 und die zugehörigen Seitenstege 13 der Messerreihe 6 in das Schneidgut ein, ohne den bereits geschnittenen Teil aufzubiegen.

Erst wenn die Vorderkante des Schneidgutes die Eindellung 14 erreicht hat, wird der angeschnittene Streifen mit einem relativ langen Hebelarm von etwa zwei bis drei Mal der Tiefe der Eindellung 14 nach unten abgelenkt. Diese Ablenkung reicht aus, daß die abgeschnittenen Streifen die durchbrüche 16 in der Weise passieren, daß sie auf der Unterseite der Grundplatte 2 aus den Durchbrüchen 16 hinaustreten.

Nach Passieren der ersten Messerreihe 6 trifft das Schneigut auf die zweite Messerreihe 7, die gegenüber der ersten Messerreihe 6 querversetzt angeordnet ist.

Nun werden die stehengebliebenen Teile des Schneidgutes als Streifen in gleicher Weise abgeschnitten wie oben erläutert.

Befindet sich dann das Schneidgut auf der unteren Anlauffläche 5, so wird es durch eine Zugbewegung des Armes erneut gegen die Messerreihe 7 geführt, nun aber in entgegengesetzter Richtung.

Aufgrund des äußerst geringen Schnittwiderstandes bleibt das Schneidgut vollflächig auf der Anlauffläche 5 liegen, ohne abzutippen. Dies ist gar nicht so selbstverständlich, da aufgrund des ungünstigen Kraftangriffes auf das Schneidgut während der Zugbewegung nach oben das Schneidgut bereits bei einem mittleren Widerstand auf seine Vorderkante zum Abheben von der Anlauffläche 5 neigen würde. Dieses Problem tritt hier jedoch nicht auf.

Da die bei der Hinbewegung abgeschnittenen Streifen bereits aus den Durchbrüchen 16 herausgefallen sind, sind diese nun frei für den Durchtritt der bei der Herbewegung abgeschnittenen Streifen.

Nach Passieren der Messerreihe 7 werden in gleicher Weise wie oben erwähnt an der Messerreihe 6 weitere Streifen vom Schneidgut abgeschnitten.

Bezüglich der Darstellung in Fig. 2 sei noch darauf hingewiesen, daß die Schneiden 8 nicht lediglich von oben, sondern von beiden Flächen angeschärft sind. Auch sei bemerkt, daß die Eindellungen 14, wie sie in Fig. 3 dargestellt sind, in der zeichnerischen Wiedergabe nicht maßstäblich der der tatsächlichen Ausgestaltung, bezogen auf die Tiefe der Eindellungen, entsprechen.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

BEZUGSZEICHENLISTE

| 1 | Rohkostschneider |
|---|---|
| 2 | Grundplatte |
| 3 | Oberseite |
| 4 | Anlauffläche |
| 5 | Anlauffläche |
| 6 | Messerreihe |
| 7 | Messerreihe |
| 8 | Anlauffläche |
| 9 | Unterseite |
| 10 | Metallband |
| 11 | Querstege |
| 12 | Querstege |
| 13 | Seitenstege |
| 14 | Eindellung |
| 15 | Längsstege |
| 16 | Durchbrüche |
| 17 | Eindrückungen |
| 18 | Öffnungen |
| A | Schneideinrichtung |

**Patentansprüche**

1. Rohkostschneider für das Schneiden von Rohkost in Streifen, mit einer Grundplatte (2), auf deren Oberseite zwei in einer Ebene liegende Anlaufflächen (4, 5) vorgesehen sind, zwischen denen mindestens eine im wesentlichen quer zur Schneidrichtung verlaufende Messerreihe (6, 7) angeordnet ist, deren Messer mit etwa umgekehrt U-förmigen Schneiden (8) in der Höhe über die Anlaufflächen (4, 5) hinausragen und zur Unterseite der Grundplatte (2) hin offen ausgebildet sind, wobei die Unterseite der Messer zumindest zum Teil zur Grundplatte hin geneigt ausgebildet ist, die Messerreihe(n) (6, 7) aus einem dünnen Metallband unter Bildung von oberen (11) und unteren Querstegen (12) und diese verbindenden Seitenstegen (13) einstückig mäanderartig gebogen und mit den unteren Querstegen (13) in der Grundplatte (2) befestigt ist/sind, die unteren Querstege (13) unterhalb oder auf der Höhe der Anlaufflächen (4, 5) angeordnet sind, die oberen Querstege (11) über die Anlaufflächen hinausragen und zur Bildung doppelschneidiger Messer bezogen auf die Schneidrichtung im wesentlichen parallel zur Ebene der Anlaufflächen (4, 5) angeordnet sowie bezogen auf die Schneidrichtung jeweils in ihrer Mitte zur Grundplatte (2) hin eingedellt ausgebildet sind und in der Grundplatte (2) in Höhe der Messerreihe(n) (6, 7) Durchbrüche (16) angeordnet sind, welche unterhalb der oberen Querstege (11) der Messer (6, 7) liegen und die von Längsstegen (15) begrenzt sind, in die die unteren Querstege (12) der Messer (6, 7) miteingespritzt sind, dadurch gekennzeichnet, daß das Metallband (10), aus dem die Messerreihe(n) (6, 7) gebildet ist/sind, von beiden Flächen her angeschärft ist.

2. Rohkostschneider nach Anspruch 1, dadurch gekennzeichnet, daß die Durchbrüche (16) länger als die oberen Querstege (11) der Messer (6, 7) ausgebildet sind und mit Abstand von den Schneiden (8) der Messer (6, 7) enden.

3. Rohkostschneider nach Anspruch 1 oder 2, dadurch gekennzeichnet, daß an den unteren Querstegen (12) der Messer (6, 7) Eindrückungen (17) zum Verankern der Querstege (12) im Kunststoff angebracht sind.

4. Rohkostschneider nach Anspruch 3, dadurch gekennzeichnet, daß die Eindrückungen (17) mit Öffnungen (18) zum Durchtritt des Kunststoffes versehen sind.

5. Rohkostschneider nach Anspruch 3 oder 4, dadurch gekennzeichnet, daß bezogen auf die Schneidrichtung (A) die Eindrückungen (17) in der Mitte der unteren Querstege (12) angebracht sind.

6. Rohkostschneider nach einem der vorangehenden Ansprüche, dadurch gekennzeichnet, daß die Eindellungen (14) der oberen Querstege (11) quer zur Schneidrichtung (A) gesehen etwa dreieckförmig ausgebildet sind.

7. Rohkostschneider nach einem der vorangehenden Ansrprüche, dadurch gekennzeichnet, daß die Eindellungen (14) mit Abstand oberhalb der Ebene der Anlaufflächen (4, 5) enden.

8. Rohkostschneider nach einem der vorangehenden Ansprüche, dadurch gekennzeichnet, daß der Abstand zwischen der Mitte einer Eindellung (14) und der zugehörigen Schneide (8) eines Messers (6 bzw. 7) etwa zwei bis drei mal der Tiefe der Eindellung (14) entspricht.

9. Rohkostschneider nach einem der vorangehenden Ansprüche, dadurch gekennzeichnet, daß der Abstand vor, Rand einer Eindellung (14) bis zur zugehörigen, benachbarten Schneide (8) etwa einmal der Tiefe einer Eindellung (14) entspricht.

10. Rohkostschneider nach einem der vorangehenden Ansprüche, dadurch gekennzeichnet, daß die Breite eines oberen Quersteges (11) etwa der eines unteren Quersteges (12) entspricht.

11. Rohkostschneider nach einem der vorangehenden Ansprüche, dadurch gekennzeichnet, daß zwei Messerreihen (6, 7) in Schneidrichtung (A) hintereinander und quer zur Schneidrichtung (A) versetzt auf der Grundplatte (2) angeordnet sind.

12. Rohkostschneider nach einem der vorangehenden Ansprüche, dadurch gekennzeichnet, daß die Messerreihe(n) (6, 7) rechtwinklig zur Schneidrichtung (A) auf der Grundplatte (2) angebracht ist/sind.

13. Rohkostschneider nach einem der Ansprüche 1 bis 11 dadurch gekennzeichnet, daß die Messerreihe(n) (6, 7) diagonal zur Schneidrichtung (A) auf der Grundplatte (2) angebracht ist/sind.

14. Rohkostschneider nach einem der Ansprüche 11 bis 13, gekennzeichnet durch Anordnung der Messerreihen (6, 7) derart nah aneinander, daß selbst kleine Früchte oder dgl. nach dem Abschneiden durch die erste Messerreihe derart mittels dieser führbar sind, daß sie exakt in der zweiten, hierzu versetzte Messerreihe hineinlangen.

15. Rohkostschneider nach einem der vorangehenden Ansprüche, dadurch gekennzeichnet, daß die Grundplatte (2) aus Kunststoff ausgebildet ist.

## Claims

1. A grater for cutting vegetables and the like into strips, comprising a baseplate (2), on the top of which there are provided two co-planar guide surfaces (4, 5) between which there is disposed at least one row of cutters (6, 7) which extend substantially transversely in relation to the direction of cutting, the cutters projecting by substantially inverted-U shaped cutting edges (8) above the height of the guide surfaces (4, 5) and being open towards the underside of the baseplate (2), the underside of the cutters being at least partly inclined to the baseplate, the or each row of cutters (6, 7) being bent meander-fashion in one piece from a thin metal strip to form top cross-members (11) and bottom cross-members (12) and side members (13) connecting the same, and being secured to the bottom cross-members (13) in the baseplate (2), the bottom cross-members (13) being disposed beneath or level with the guide surfaces (4, 5) while the top cross-members (11) project beyond the guide surfaces and are disposed substantially parallel to the plane of the guide surfaces (4, 5) to form cutters having double cutting edges with respect to the direction of cutting, and being each recessed in the centre towards the baseplate (2) with respect to the direction of cutting, apertures (16) being provided in the baseplate (2) level with the or each row of cutters (6, 7) and being situated beneath the top cross-members (11) of the cutters (6, 7) and being bounded by longitudinal members (15) into which the bottom cross-members (12) of the cutters (6, 7) are co-injection moulded, characterised in that the metal strip (10) from which the or each row of cutters (6, 7) is formed is sharpened from both surfaces.

2. A grater according to claim 1, characterised in that the apertures (16) are longer than the top cross-members (11) of the cutters (6, 7) and terminate at a distance from the cutting edges (8) of the cutters (6, 7).

3. A grater according to claim 1 or 2, characterised in that indentations (17) for anchoring the cross-members (12) in the plastic are provided at the bottom cross-members (12) of the cutters (6, 7).

4. A grater according to claim 3, characterised in that the indentations (17) are formed with apertures (18) for the passage of the plastic.

5. A grater according to claim 3 or 4, characterised in that the indentations (17) are disposed in the middle of the bottom cross-members (12) with respect to the cutting direction (A).

6. A grater according to any one of the preceding claims, characterised in that the recesses (14) in the top cross-members (11) are substantially triangular as considerd transversely to the direction of cutting (A).

7. A grater according to any one of the preceding claims, characterised in that the recesses (14) terminate at a distance above the plane of the guide surfaces (4, 5).

8. A grater according to any one of the preceding claims, characterised in that the distance between the centre of a recess (14) and the associated cutting edge (8) of a cutter (6, 7) is about two to three times the depth of the recess (14).

9. A grater according to any one of the preceding claims, characterised in that the distance from the edge of a recess (14) to the associated adjacent cutting edge (8) is substantially equal to the depth of a recess (14).

10. A grater according to any one of the preceding claims, characterised in that the width of a top cross-member (11) corresponds substantially to that of a bottom cross-member (12).

11. A grater according to any one of the preceding claims, characterised in that two rows of cutters (6, 7) are disposed on the baseplate (2) consecutively in the cutting direction (A) and in offset relationship transversely to the cutting direction (A).

12. A grater according to any one of the preceding claims, characterised in that the or each row of cutters (6, 7) is disposed on the baseplate (2) at right angles to the direction of cutting (A).

13. A grater according to any one of claims 1 to 11, characterised in that the or each row of cutters (6, 7) is disposed on the baseplate (2) diagonally to the direction of cutting (A).

14. A grater according to any one of claims 11 to 13, characterised by the provision of rows of cutters (6, 7) so close together that even small fruits or the like are so guidable by the first row of cutters after being cut by the same that they pass exactly into the second row of cutters offset therefrom.

15. A grater according to any one of the preceding claims, characterised in that the baseplate (2) is made from plastics.

**Revendications**

1. Râpe à légumes pour râper des légumes en lamelles, comportant une plaque de base (2) sur le côté supérieur de laquelle sont prévues deux surfaces d'approche (4, 5) situées dans un plan, entre lesquelles est disposée au moins une série de lames (6, 7) s'étendant essentiellement transversalement par rapport au sens de coupe, dont les lames comportant un tranchant (8) en forme de U sensiblement inversé font saillie en hauteur au dessus des surfaces d'approche (4, 5) et sont ouvertes vers le côté inférieur de la plaque de base (2), le côté inférieur des lames étant réalisé au moins en partie de façon inclinée vers la plaque de base, la ou les séries de lames (6, 7) constituées d'une bande de métal mince étant cintrées en formant des méandres en formant des traverses supérieures (11) et des traverses inférieures (12) ainsi que des traverses latérales (13) reliant celles-ci en une seule pièce et étant fixées par les traverses inférieures (13) à la plaque de base (2), les traverses inférieures (13) étant disposées en dessous ou à la hauteur des surfaces d'approche (4, 5), les traverses supérieures (11) faisant saillie au-dessus des surfaces d'approche et étant disposées pour la formation de lames à double tranchant par rapport au sens de coupe essentiellement parallèlement au plan des surfaces d'approche (4, 5) de même qu'elles sont chacune déformées par rapport au sens de coupe dans leur milieu vers la plaque de base (2) et que des ouvertures (16) sont disposées dans la plaque de base (2) à la hauteur de la ou des séries de lames (6, 7) qui se trouvent sous la traverse supérieure (11) des lames (6, 7) et qui sont délimités par des traverses longitudinales (15), dans lesquelles les traverses inférieures (12) des lames (6, 7) sont formées par injection, caractérisée en ce que la bande de métal (10) dans laquelle la ou les séries de lames (6, 7) sont constituées, est affutée des deux côtés.

2. Râpe à légumes selon la revendication 1, caractérisée en ce que les ouvertures (16) sont plus longues que la traverse supérieure (11) des lames (6, 7) et se terminent à distance des tranchants (8) des lames (6, 7).

3. Râpe à légumes selon la revendication 1 ou 2, caractétisée en ce que des empreintes (17) sont appliquées aux traverses inférieures (12) des lames (6, 7) pour ancrer les traverses (12) dans la matière plastique.

4. Râpe à légumes selon la revendication 3, caractérisée en ce que les empreintes (17) sont munies d'ouvertures (18) pour le passage de la matière plastique.

5. Râpe à légumes selon les revendications 3 ou 4, caractérisée en ce que des empreintes (17) sont disposées au milieu de la traverse inférieure (12) par rapport au sens de coupe (A).

6. Râpe à légumes selon l'une des revendications précédentes, caractérisée en ce que les déformations (14) de la traverse supérieure (11) sont réalisées sensiblement en forme de triangle considéré transversalement au sens de coupe (A).

7. Râpe à légumes selon l'une des revendications précédentes, caractérisée en ce que les déformations (14) se terminent à distance au dessus du plan des surfaces d'approche (4, 5).

8. Râpe à légumes selon l'une des revendications précédentes, caractérisée en ce que la distance entre le milieu d'une déformation (14) et le tranchant (8) correspondant d'une lame (6, 7) correspond sensiblement à deux ou trois fois la profondeur de la déformation (14).

9. Râpe à légumes selon l'une des revendications précédentes, caractérisée en ce que l'intervalle du bord d'une déformation (14) jusqu'au tranchant (8) associé suivant correspond à peu près à une fois la profondeur d'une déformation (14).

10. Râpe à légumes selon l'une des revendications précédentes, caractérisée en ce que la largeur d'une traverse supérieure (11) correspond sensiblement à celle d'une traverse inférieures (12).

11. Râpe à légume selon l'une des revendications précédentes, caractérisée en ce que deux séries de lames (6, 7) sont disposées les unes derrière les autres dans le sens de coupe (A) et transversalement au sens de coupe (A) avec un décalage sur la plaque de base (2).

12. Râpe à légumes selon l'une des revendications précédentes, caractérisée en ce que la ou les séries de lames (6, 7) sont disposées à angle droit par rapport au sens de coupe (A) sur la plaque de base (2).

13. Râpe à légumes selon l'une des revendications 1 à 11, caractérisée en ce que la ou les séries de lames (6, 7) sont disposées en diagonale par rapport au sens de coupe (A) sur la plaque de base (2).

14. Râpe à légumes selon l'une des revendications 11 à 13, caractérisée par la disposition des séries de lames (6, 7) de façon aussi proche les unes des autres que même des petits fruits ou analogues peuvent être amenés aprés avoir été coupés par la première série de lames au moyen de celles-ci de façon qu'ils parviennent exactement dans la deuxième série de lames, décalée par rapport à celles-ci.

15. Râpe à légumes selon l'une des revendications précédentes, caractérisée en ce que la plaque de base (2) est réalisée en matière plastique.

FIG.1

FIG.2

FIG.3